# EUROPEAN PATENT APPLICATION

(11) **EP 3 267 732 A1**
(43) Date of publication of application: **10.01.2018**
(21) Application number: 17179828.3
(22) Date of filing: 05.07.2017
(51) Int. Cl.: H04W 48/12, H04W 48/20, H04W 68/00

(54) **PAGING CONTEXT HANDLING FOR MULTI-CARRIER LOAD DISTRIBUTION IN MOBILE COMMUNICATIONS**

(30) Priority: 06.07.2016 US 201662358610 P
(71) Applicant: MediaTek Inc., Hsin-Chu 300 (TW)
(72) Inventor: TU, Pei-Hua, 300 Hsinchu City (TW)
(74) Representative: 2K Patentanwälte Blasberg Kewitz & Reichel

(57) **Abstract**

Various solutions for handling of paging context with respect to user equipment (UE) in mobile communications are described. A UE may receive a paging message with a system information modification and a redistribution indication. The UE may start a timer and perform a first inter-frequency redistribution procedure according to a first set of system information block (SIB) parameters. The UE may further receive a second set of SIB parameters before the timer is expired. The UE may perform the first inter-frequency redistribution procedure according to the second set of SIB parameters after receiving the second set of SIB parameters.

## Description

### CROSS REFERENCE TO RELATED PATENT APPLICATION

The present disclosure claims the priority benefit of U.S. Provisional Patent Application No. 62/358,610, filed on 6 July 2016, the content of which is incorporated by reference in its entirety.

### TECHNICAL FIELD

The present disclosure is generally related to mobile communications and, more particularly, to handling of paging context with respect to user equipment in mobile communications.

### BACKGROUND

Unless otherwise indicated herein, approaches described in this section are not prior art to the claims listed below and are not admitted to be prior art by inclusion in this section.

In the 3^{rd} Generation Partnership Project (3GPP) Release-13 specifications, a new feature of multi-carrier load distribution (MCLD) is introduced. MCLD is used for redistributing user equipment (UE) in Radio Resource Control (RRC) idle mode to minimize the needs for load triggered handover or redirection of UE in RRC connected mode. Specifically, when a large number of UE are distributed in certain areas, the cells or base stations in those areas may need to serve a great number of UE which may exceed the capacity of the cells or the base stations. When those UE request services from the serving cells simultaneously, the serving cells may become overloading or in serious congestion. To prevent such circumstance, network operators may use MCLD to properly redistribute some UE from current cells to neighbor cells in those areas. The great number of UE can be evenly distributed among cells in certain areas. Therefore, the loading can be balanced among cells in the congested areas.

To initiate MCLD, a redistribution indication can be used by a serving cell to inform the UE to perform inter-frequency redistribution procedures. The redistribution indication can be carried in a paging message. In the inter-frequency redistribution procedure, the UE needs to determine a target cell for redistribution according to system information received from a serving cell. On the other hand, the system information transmitted by serving cell may be changed or updated at times. A system information modification is used by a serving cell to inform the UE to re-acquire the updated system information. The system information modification can be also carried in a paging message. However, the system information modification is used to inform the UE that the system information is going to be changed and new system information will be transmitted after a period. This means that the system information will not be changed immediately when receiving the paging message with the system information modification.

Accordingly, when receiving a paging message with a redistribution indication and a system information modification, it is not clear how and when to perform the inter-frequency redistribution procedure. There is vulnerability in the 3GPP specifications regarding how to deal with a paging message with a redistribution indication and a system information modification at the same time. It is not defined in the 3GPP specifications how UE should react when receiving the paging message. The uncertainty may lead to un-synchronization and unexpected behaviors between UE and networks.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to propose solutions or schemes that address the aforementioned issues with respect to paging context handling and inter-frequency redistribution procedure on a UE. In implementations in accordance with the present disclosure, when receiving a paging message with a system information modification and a redistribution indication, the UE may perform the inter-frequency redistribution procedure according to the current system information. Alternatively, the UE may suspend the inter-frequency redistribution procedure until receiving the new system information. Alternatively, the UE may perform the inter-frequency redistribution procedure according to the current system information first, and then perform the inter-frequency redistribution procedure according to the new system information after receiving the new system information.

In one example implementation, a method may involve an apparatus receiving a paging message with a system information modification and a redistribution indication. The method may also involve the apparatus starting a timer. The method may further involve the apparatus performing a first inter-frequency redistribution procedure according to a first set of system information block (SIB) parameters.

In another example implementation, a method may involve an apparatus receiving a paging message with a system information modification and a redistribution indication. The method may also involve the apparatus starting a timer. The method may further involve the apparatus performing a first inter-frequency redistribution procedure according to a first set of SIB parameters until the timer is expired.

In yet another example implementation, a method may involve an apparatus receiving a paging message with a system information modification and a redistribution indication. The method may also involve the apparatus suspending an inter-frequency redistribution procedure. The method may further involve the apparatus receiving a new set of SIB parameters. The method may additionally involve the apparatus performing the inter-frequency redistribution procedure according to the new set of SIB parameters after receiving the new set of SIB parameters.

### BRIEF DESCRIPTION OF THE DRAWINGS

The accompanying drawings are included to provide a further understanding of the disclosure, and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram depicting an example scenario under schemes in accordance with implementations of the present disclosure.
FIG. 2 is a diagram depicting an example scenario under schemes in accordance with implementations of the present disclosure.
FIG. 3 is a diagram depicting an example scenario under schemes in accordance with implementations of the present disclosure.
FIG. 4 is a diagram depicting an example scenario under schemes in accordance with implementations of the present disclosure.
FIG. 5 is a block diagram of an example apparatus in accordance with an implementation of the present disclosure.
FIG. 6 is a flowchart of an example process in accordance with an implementation of the present disclosure.
FIG. 7 is a flowchart of an example process in accordance with an implementation of the present disclosure.
FIG. 8 is a flowchart of an example process in accordance with an implementation of the present disclosure.

### DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to the handling of registration rejects with respect to user equipment in mobile communications. According to the present disclosure, a number of possible solutions may be implemented separately or jointly. That is, although these possible solutions may be described below separately, two or more of these possible solutions may be implemented in one combination or another.

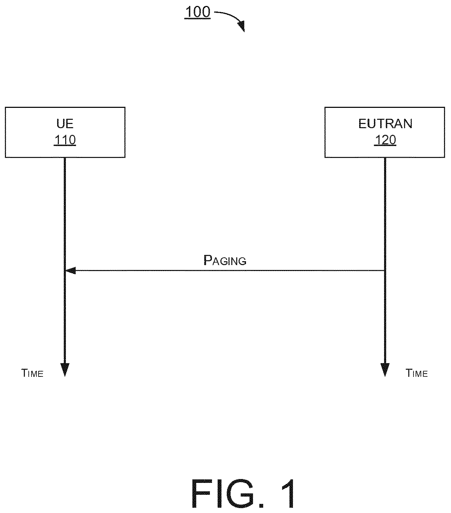

FIG. 1 illustrates an example scenario 100 under schemes in accordance with implementations of the present disclosure. Scenario 100 involves a user equipment (UE) 110 and an Evolved Universal Terrestrial Radio Access Network (EUTRAN) 120, which may be part of a wireless network (e.g., a LTE network, a LTE-Advanced network or a LTE-Advanced Pro network). EUTRAN 120 is able to send a paging message to UE 100 when UE 100 is in Radio Resource Control (RRC) idle mode or in RRC connected mode. The purpose of this procedure is, for example and without limitation, to transmit paging information to a UE in RRC idle mode, to inform UEs in RRC idle mode and UEs in RRC connected mode about a system information change, or to inform UEs in RRC idle mode to perform E-UTRAN inter-frequency redistribution procedure.

Accordingly, the paging message may carry a plurality of information such as, for example and without limitation, paging information, system information modification and redistribution indication. The paging information is provided for the UE to initiate RRC connection establishment for receiving an incoming call. If the system information modification is included, the UE shall re-acquire the required system information using the system information acquisition procedure. If the redistribution indication is included, the UE shall perform E-UTRAN inter-frequency redistribution procedure. However, if EUTRAN send a paging message with the system information modification and the redistribution indication simultaneously, it is not specified how UE shall handle the paging message.

In view of the aforementioned problems, the present disclosure proposes multiple solutions directed to paging context handling with respect to a user equipment in mobile communications.

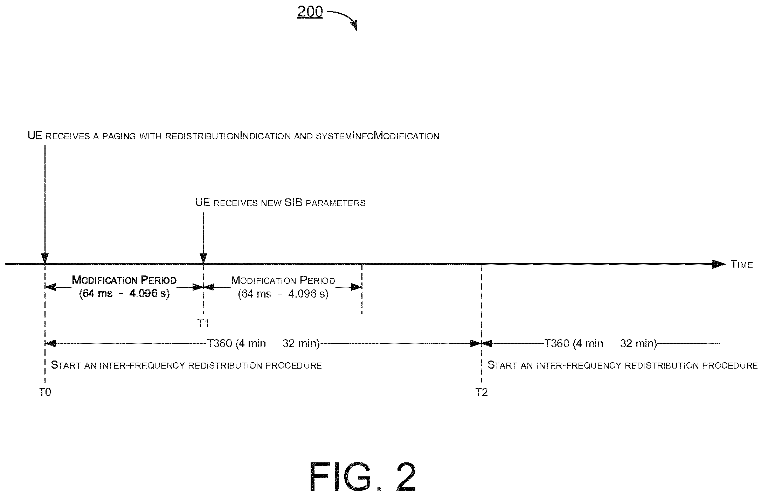

FIG. 2 illustrates an example scenario 200 under schemes in accordance with implementations of the present disclosure. Scenario 200 involves a UE and a plurality of cells (e.g., base stations or eNodeBs), which may be part of a wireless network (e.g., a EUTRAN, a LTE network, a LTE-Advanced network or a LTE-Advanced Pro network). At first, the UE camps on a serving cell and receives a first set of system information block (SIB) parameters from the serving cell. The first set of SIB parameters include, for example without limitation, a modification period received from SIB2, a timer value T360, a redistribution factor of serving cell (e.g., redistributionServingFactor) and a priority of serving cell received from SIB3, and redistribution factors of neighbor cells (e.g., redistributionFactorCell) and priorities of neighbor cells received from SIB5. In general but without limitation, the timer value T360 is greater than the modification period. For example and without limitation, the timer value T360 is configured from 4 minutes to 32 minutes and the modification period is configured from 64 milliseconds to 4.096 seconds.

At time t0, the UE receives a paging message with a system information modification and a redistribution indication from the serving cell. According to 3^{rd} Generation Partnership Project (3GPP) specifications, the system information modification is used to inform the UE that the system information is going to be changed and new system information will be transmitted after a modification period. In other words, the system information will be maintained the same within a modification period. If EUTRAN changes the system information, new system information will be transmitted at the boundary between current modification period and next modification period. As showed in Fig. 2, if the paging message with the system information modification is received at t0, the new system information will be transmitted at t1. The redistribution indication is used to inform the UE to perform an E-UTRAN inter-frequency redistribution procedure.

In scenario 200, when the UE receives the paging message with the system information modification and the redistribution indication at time t0, the UE starts a timer T360 with the timer value received from SIB3 and performs a first inter-frequency redistribution procedure according to the first set of SIB parameters until T360 is expired. Since the UE have not received the new system information at time t0, the UE can only perform the first inter-frequency redistribution procedure according to the first set of SIB parameters. In the first inter-frequency redistribution procedure, the UE will determine a first target cell according to the first set of SIB parameters. Specifically, the UE determines weightings of the neighbor cells based on the redistribution factors of the neighbor cells (e.g., redistributionFactorCell) received from SIB5 and determines weightings of the serving cells based on the redistribution factor of serving cell (e.g., redistributionServingFactor) received from SIB3. The UE then determines the first target cell based on the weightings. For example, the UE may determine a cell with the highest weighting as the first target cell where the priority of the first target cell may be lower than the priority of the serving cell. In this implementation, the UE does not reselect to the first target cell after the first target cell is determined.

At time t1, the new system information is transmitted from the serving cell and the UE is able to receive a second set of SIB parameters. Since the first inter-frequency redistribution procedure is initiated and should be performed until T360 is expired, the UE keeps performing the first inter-frequency redistribution procedure according to the first set of SIB parameters without using the newly received second set of SIB parameters. In some implementations, the UE may keep staying on the current cell during the first inter-frequency redistribution procedure until T360 is expired. The UE does not reselect to another cell when receiving the second set of SIB parameters.

At time t2, T360 is expired and the UE terminates the first inter-frequency redistribution procedure. Then the UE restarts a timer T360 with the timer value received from SIB3 and performs a second inter-frequency redistribution procedure until T360 is expired. Since the UE has received the second set of SIB parameters at t1, the UE can perform the second inter-frequency redistribution procedure according to the second set of SIB parameters. In the second inter-frequency redistribution procedure, the UE will determine a second target cell according to the second set of SIB parameters. Specifically, the UE determines weightings of the neighbor cells based on the redistribution factors of the neighbor cells (e.g., redistributionFactorCell) received from SIB5 and determines weightings of the serving cells based on the redistribution factor of serving cell (e.g., redistributionServingFactor) received from SIB3. The UE then determines the second target cell based on the weightings. For example, the UE may determine a cell with the highest weighting as the second target cell where the priority of the second target cell may be lower than the priority of the serving cell. In some implementations, the redistribution factors of the neighbor cells in the second set of SIB parameters may be different from the redistribution factors of the neighbor cells in the first set of SIB parameters. Therefore the second target cell may be different from the first target cell.

In some implementations, the UE may perform a cell reselection procedure after determining a target cell. For example, the UE may be configured to measure channel quality or signal strength of a target cell. If a cell reselection criterion is satisfied (e.g., channel quality or signal strength of the target cell is greater than a threshold value), the UE may determine to reselect to the target cell. If a cell reselection criterion is not satisfied (e.g., channel quality or signal strength of the target cell is less than a threshold value), the UE may determine to stay on a current cell. Accordingly, in the first inter-frequency redistribution procedure, the UE may perform a cell reselection procedure and reselect to the first target cell after the first target cell is determined. In the second inter-frequency redistribution procedure, the UE may perform a cell reselection procedure and reselect to the second target cell after the second target cell is determined.

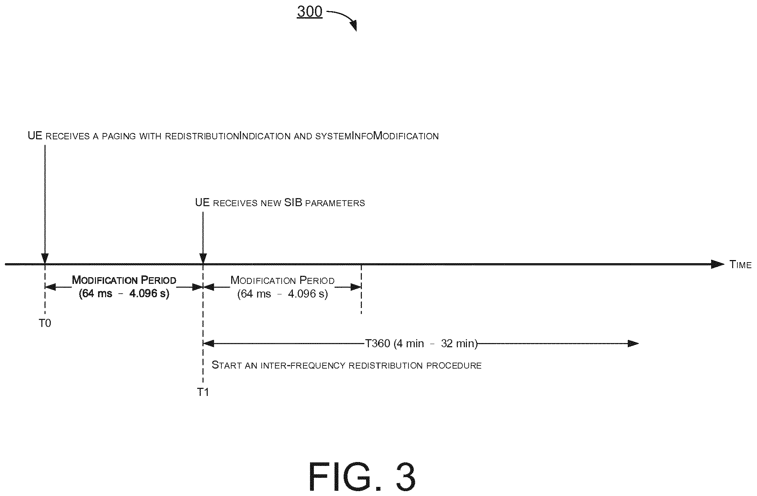

FIG. 3 illustrates an example scenario 300 under schemes in accordance with implementations of the present disclosure. Scenario 300 involves a UE and a plurality of cells (e.g., base stations or eNodeBs), which may be part of a wireless network (e.g., a EUTRAN, a LTE network, a LTE-Advanced network or a LTE-Advanced Pro network). At first, the UE camps on a serving cell and receives a first set of SIB parameters from the serving cell. The first set of SIB parameters include, for example without limitation, a modification period received from SIB2, a timer value T360, a redistribution factor of serving cell (e.g., redistributionServingFactor) and a priority of serving cell received from SIB3, and redistribution factors of neighbor cells (e.g., redistributionFactorCell) and priorities of neighbor cells received from SIB5. In general but without limitation, the timer value T360 is greater than the modification period. For example and without limitation, the timer value T360 is configured from 4 minutes to 32 minutes and the modification period is configured from 64 milliseconds to 4.096 seconds.

At time t0, the UE receives a paging message with a system information modification and a redistribution indication from the serving cell. According to 3GPP specifications, the system information modification is used to inform the UE that the system information is going to be changed and new system information will be transmitted after a modification period. In other words, the system information will be maintained the same within a modification period. If EUTRAN changes the system information, new system information will be transmitted at the boundary between current modification period and next modification period. As showed in Fig. 3, if the paging message with the system information modification is received at t0, the new system information will be transmitted at t1. The redistribution indication is used to inform the UE to perform an E-UTRAN inter-frequency redistribution procedure.

In scenario 300, when the UE receives the paging message with the system information modification and the redistribution indication at time t0, the UE does not perform an inter-frequency redistribution procedure and suspend the inter-frequency redistribution procedure. The UE does not reselect to a target cell when receiving the paging message and stays on the serving cell a modification period until t1.

At time t1, the new system information is transmitted from the serving cell and the UE is able to receive a second set of SIB parameters (i.e., a new set of SIB parameters). After receiving the second set of SIB parameters, the UE starts a timer T360 with the timer value received from SIB3 and performs a first inter-frequency redistribution procedure according to the second set of SIB parameters until T360 is expired. In the first inter-frequency redistribution procedure, the UE will determine a first target cell according to the second set of SIB parameters. Specifically, the UE determines weightings of the neighbor cells based on the redistribution factors of the neighbor cells (e.g., redistributionFactorCell) received from SIB5 and determines weightings of the serving cells based on the redistribution factor of serving cell (e.g., redistributionServingFactor) received from SIB3. The UE then determines the first target cell based on the weightings. For example, the UE may determine a cell with the highest weighting as the first target cell where the priority of the first target cell may be lower than the priority of the serving cell.

In some implementations, the UE may perform a cell reselection procedure after determining a target cell. For example, the UE may be configured to measure channel quality or signal strength of a target cell. If a cell reselection criterion is satisfied (e.g., channel quality or signal strength of the target cell is greater than a threshold value), the UE may determine to reselect to the target cell. If a cell reselection criterion is not satisfied (e.g., channel quality or signal strength of the target cell is less than a threshold value), the UE may determine to stay on a current cell. Accordingly, in the first inter-frequency redistribution procedure, the UE may perform a cell reselection procedure and reselect to the first target cell after the first target cell is determined.

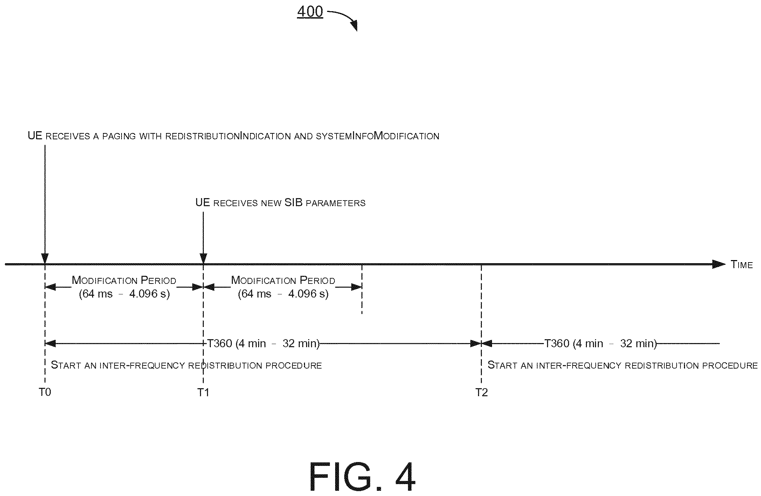

FIG. 4 illustrates an example scenario 400 under schemes in accordance with implementations of the present disclosure. Scenario 400 involves a UE and a plurality of cells (e.g., base stations or eNodeBs), which may be part of a wireless network (e.g., a EUTRAN, a LTE network, a LTE-Advanced network or a LTE-Advanced Pro network). At first, the UE camps on a serving cell and receives a first set of SIB parameters from the serving cell. The first set of SIB parameters include, for example without limitation, a modification period received from SIB2, a timer value T360, a redistribution factor of serving cell (e.g., redistributionServingFactor) and a priority of serving cell received from SIB3, and redistribution factors of neighbor cells (e.g., redistributionFactorCell) and priorities of neighbor cells received from SIB5. In general but without limitation, the timer value T360 is greater than the modification period. For example and without limitation, the timer value T360 is configured from 4 minutes to 32 minutes and the modification period is configured from 64 milliseconds to 4.096 seconds.

At time t0, the UE receives a paging message with a system information modification and a redistribution indication from the serving cell. According to 3GPP specifications, the system information modification is used to inform the UE that the system information is going to be changed and new system information will be transmitted after a modification period. In other words, the system information will be maintained the same within a modification period. If EUTRAN changes the system information, new system information will be transmitted at the boundary between current modification period and next modification period. As showed in Fig. 4, if the paging message with the system information modification is received at t0, the new system information will be transmitted at t1. The redistribution indication is used to inform the UE to perform an E-UTRAN inter-frequency redistribution procedure.

In scenario 400, when the UE receives the paging message with the system information modification and the redistribution indication at time t0, the UE starts a timer T360 with the timer value received from SIB3 and performs a first inter-frequency redistribution procedure according to the first set of SIB parameters. Since the UE have not received the new system information at time t0, the UE can only perform the first inter-frequency redistribution procedure according to the first set of SIB parameters. In the first inter-frequency redistribution procedure during time t0 to t1, the UE will determine a first target cell according to the first set of SIB parameters. Specifically, the UE determines weightings of the neighbor cells based on the redistribution factors of the neighbor cells (e.g., redistributionFactorCell) received from SIB5 and determines weightings of the serving cells based on the redistribution factor of serving cell (e.g., redistributionServingFactor) received from SIB3. The UE then determines the first target cell based on the weightings. For example, the UE may determine a cell with the highest weighting as the first target cell where the priority of the first target cell may be lower than the priority of the serving cell. In this implementation, the UE does not reselect to the first target cell after the first target cell is determined.

At time t1, the new system information is transmitted from the serving cell and the UE is able to receive a second set of SIB parameters. After receiving the second set of SIB parameters, the UE performs the first inter-frequency redistribution procedure according to the newly received second set of SIB parameters and keeps running the timer T360 until T360 is expired. The timer T360 is not stopped or restarted at time t1. In the first inter-frequency redistribution procedure during time t1 to t2, the UE will determine a second target cell according to the second set of SIB parameters. Specifically, the UE determines weightings of the neighbor cells based on the redistribution factors of the neighbor cells (e.g., redistributionFactorCell) received from SIB5 and determines weightings of the serving cells based on the redistribution factor of serving cell (e.g., redistributionServingFactor) received from SIB3. The UE then determines the second target cell based on the weightings. For example, the UE may determine a cell with the highest weighting as the second target cell where the priority of the second target cell may be lower than the priority of the serving cell. In some implementations, the redistribution factors of the neighbor cells in the second set of SIB parameters may be different from the redistribution factors of the neighbor cells in the first set of SIB parameters. Therefore the second target cell may be different from the first target cell.

At time t2, T360 is expired and the UE terminates the first inter-frequency redistribution procedure. In some implementations, a flag in a SIB (e.g., redistrOnPagingOnly) is used to indicate that the inter-frequency redistribution procedure should be performed in a one-shot mode or in a continuous mode. If the flag (e.g., redistrOnPagingOnly) is present in SIB3, the inter-frequency redistribution procedure is initiated as the one-shot mode. This means that the inter-frequency redistribution procedure should be performed only once. When T360 is expired, the UE should stop performing the inter-frequency redistribution procedure. Contrary, if the flag (e.g., redistrOnPagingOnly) is not present in SIB3, the inter-frequency redistribution procedure is initiated as the continuous mode. This means that the inter-frequency redistribution procedure should be performed continuously. When T360 is expired, the UE should restart the timer T360 and perform a next inter-frequency redistribution procedure. As showed in Fig. 4, at time t2, the UE restarts a timer T360 with the timer value received from SIB3 and performs a second inter-frequency redistribution procedure until T360 is expired. Since the UE has received the second set of SIB parameters at t1, the UE can perform the second inter-frequency redistribution procedure according to the second set of SIB parameters.

In some implementations, the UE may perform a cell reselection procedure after determining a target cell. For example, the UE may be configured to measure channel quality or signal strength of a target cell. If a cell reselection criterion is satisfied (e.g., channel quality or signal strength of the target cell is greater than a threshold value), the UE may determine to reselect to the target cell. If a cell reselection criterion is not satisfied (e.g., channel quality or signal strength of the target cell is less than a threshold value), the UE may determine to stay on a current cell. Accordingly, in the first inter-frequency redistribution procedure during time t0 to t1, the UE may perform a cell reselection procedure and reselect to the first target cell after the first target cell is determined. In the first inter-frequency redistribution procedure during time t1 to t2, the UE may perform a cell reselection procedure and reselect to the second target cell after the second target cell is determined.

### Illustrative Implementations

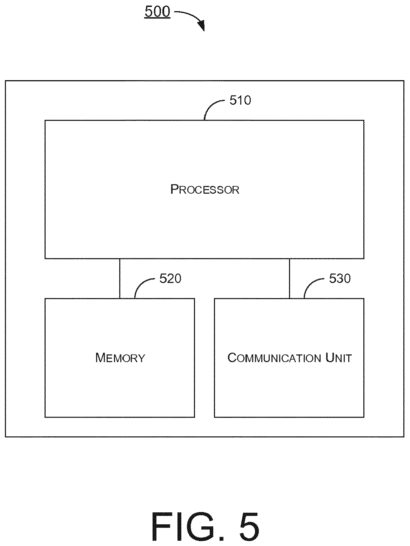

FIG. 5 illustrates an example apparatus 500 in accordance with an implementation of the present disclosure. Apparatus 500 may perform various functions to implement techniques, schemes, methods and solutions described herein. For instance, apparatus 500 may perform the multiple solutions and schemes 200 - 400 described above as well as processes 600 - 800 described below, whether individually or in any combination. In some implementations, apparatus 500 may be an electronic apparatus which may be a UE such as, for example, a smartphone, a mobile phone or any type of portable communications apparatus. In some implementations, apparatus 500 may be in the form of one or more integrated-circuit (IC) chip(s). Apparatus 500 may include one or more of those components shown in FIG. 5, such as a processor 510, a memory 520 and a communication unit 530. Apparatus 500 may include other component(s) not shown in FIG. 5 which may not be pertinent to the schemes, solutions, techniques and methods in accordance with the present disclosure and, thus, a description thereof is not provided. Processor 510 may be communicatively or otherwise operably coupled to memory 520 and communication unit 530. In some implementations, some or all of processor 510, memory 520 and communication unit 530 may be integral parts of a single IC chip. Alternatively, processor 510, memory 520 and communication unit 530 may be packaged as two or more separate and discrete IC chips.

Memory 520 may be configured to store data as well as one or more sets of processor-executable instructions. Memory 520 may include one or more computer-readable mediums such as a type of read-only memory (ROM) or random-access memory (RAM). For example, memory 520 may include a dynamic RAM (DRAM), static RAM (SRAM), thyristor RAM (T-RAM), zero-capacitor RAM (Z-RAM) or another type of volatile memory. As another example, memory device may include mask ROM, programmable ROM (PROM), erasable programmable ROM (EPROM), electrically-erasable programmable ROM (EEPROM), flash memory, solid-state memory or another type of non-volatile memory.

Communication unit 530 may include necessary hardware and/or software to perform wireless communications (e.g., transmit and receive wireless signals) with one or more external or remote devices such as, for example and not limited to, one or more cells, base stations or eNodeB stations. For instance, under the control of processor 510, communication unit 530 may engage in wireless communications with one or more eNodeB stations to transmit requests and receive messages.

Processor 510 may be implemented in the form of a single IC chip or a chipset of multiple IC chips. In one aspect, processor 510 may be implemented in the form of one or more single-core processors, one or more multi-core processors, or one or more CISC processors. That is, even though a singular term "a processor" is used herein to refer to processor 510, processor 510 may include multiple processors in some implementations and a single processor in other implementations in accordance with the present disclosure. In another aspect, processor 510 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, processor 510 is a special-purpose machine specifically designed, arranged and configured to perform specific tasks including paging context handling and inter-frequency redistribution procedure between an apparatus and a network in accordance with various implementations of the present disclosure.

In some implementations, processor 510 is configured to camp on a serving cell and receive, via communication unit 530, a first set of SIB parameters from the serving cell. The first set of SIB parameters include, for example without limitation, a modification period received from SIB2, a timer value T360, a redistribution factor of serving cell (e.g., redistributionServingFactor) and a priority of serving cell received from SIB3, and redistribution factors of neighbor cells (e.g., redistributionFactorCell) and priorities of neighbor cells received from SIB5. In general but without limitation, the timer value T360 is greater than the modification period. For example and without limitation, the timer value T360 is configured from 4 minutes to 32 minutes and the modification period is configured from 64 milliseconds to 4.096 seconds.

Processor 510 is further configured to receives, via communication unit 530, a paging message with a system information modification and a redistribution indication from the serving cell. According to 3GPP specifications, the system information modification is used to inform apparatus 500 that the system information is going to be changed and new system information will be transmitted after a modification period. In other words, the system information will be maintained the same within a modification period. If EUTRAN changes the system information, new system information will be transmitted at the boundary between current modification period and next modification period.

In some implementations, when processor 510 receives the paging message with the system information modification and the redistribution indication, processor 510 is configured to start a timer T360 with the timer value received from SIB3 and performs a first inter-frequency redistribution procedure according to the first set of SIB parameters until T360 is expired. In the first inter-frequency redistribution procedure, processor 510 is configured to determine a first target cell according to the first set of SIB parameters. Specifically, processor 510 is configured to determine weightings of the neighbor cells based on the redistribution factors of the neighbor cells (e.g., redistributionFactorCell) received from SIB5 and determines weightings of the serving cells based on the redistribution factor of serving cell (e.g., redistributionServingFactor) received from SIB3. The processor 510 is further configured to determine the first target cell based on the weightings. For example, processor 510 may be configured to determine a cell with the highest weighting as the first target cell where the priority of the first target cell may be lower than the priority of the serving cell.

Processor 510 is further configured to receives, via communication unit 530, a second set of SIB parameters. While the first inter-frequency redistribution procedure is initiated and should be performed until T360 is expired, processor 510 is configured to keep performing the first inter-frequency redistribution procedure according to the first set of SIB parameters without using the newly received second set of SIB parameters. In some implementations, apparatus 500 may be configured to keep staying on the current cell during the first inter-frequency redistribution procedure until T360 is expired. Processor 510 does not reselect to another cell when receiving the second set of SIB parameters.

When T360 is expired, processor 510 is configured to terminate the first inter-frequency redistribution procedure. Processor 510 is further configured to restart a timer T360 with the timer value received from SIB3 and perform a second inter-frequency redistribution procedure according to the second set of SIB parameters until T360 is expired. In the second inter-frequency redistribution procedure, processor 510 is configured to determine a second target cell according to the second set of SIB parameters. Specifically, processor 510 is configured to determine weightings of the neighbor cells based on the redistribution factors of the neighbor cells (e.g., redistributionFactorCell) received from SIB5 and determines weightings of the serving cells based on the redistribution factor of serving cell (e.g., redistributionServingFactor) received from SIB3. Processor 510 is further configured to determine the second target cell based on the weightings. For example, processor 510 may be configured to determine a cell with the highest weighting as the second target cell where the priority of the second target cell may be lower than the priority of the serving cell. In some implementations, the redistribution factors of the neighbor cells in the second set of SIB parameters may be different from the redistribution factors of the neighbor cells in the first set of SIB parameters. Therefore the second target cell may be different from the first target cell.

In some implementations, processor 510 may be configured to perform a cell reselection procedure after determining a target cell. For example, processor 510 may be configured to measure channel quality or signal strength of a target cell. If a cell reselection criterion is satisfied (e.g., channel quality or signal strength of the target cell is greater than a threshold value), processor 510 may be configured to determine to reselect to the target cell. If a cell reselection criterion is not satisfied (e.g., channel quality or signal strength of the target cell is less than a threshold value), processor 510 may be configured to determine to stay on a current cell. Accordingly, in the first inter-frequency redistribution procedure, processor 510 may be configured to perform a cell reselection procedure and reselect to the first target cell after the first target cell is determined. In the second inter-frequency redistribution procedure, processor 510 may be configured to perform a cell reselection procedure and reselect to the second target cell after the second target cell is determined.

Alternatively or additionally, in some implementations, when processor 510 receives the paging message with the system information modification and the redistribution indication, processor 510 may be configured not to perform an inter-frequency redistribution procedure and to suspend the inter-frequency redistribution procedure. Processor 510 may be configured not to reselect to a target cell when receiving the paging message and to stay on the serving cell for a modification period. After the modification period, processor 510 may be configured to receive, via communication unit 530, a second set of SIB parameters. After receiving the second set of SIB parameters, processor 510 may be further configured to start a timer T360 with the timer value received from SIB3 and performs a first inter-frequency redistribution procedure according to the second set of SIB parameters until T360 is expired. In the first inter-frequency redistribution procedure, processor 510 may be configured to determine a target cell according to the second set of SIB parameters. Specifically, processor 510 may be configured to determines weightings of the neighbor cells based on the redistribution factors of the neighbor cells (e.g., redistributionFactorCell) received from SIB5 and determines weightings of the serving cells based on the redistribution factor of serving cell (e.g., redistributionServingFactor) received from SIB3. Processor 510 may be further configured to determine the target cell based on the weightings. For example, processor 510 may be configured to determine a cell with the highest weighting as the target cell where the priority of the first target cell may be lower than the priority of the serving cell. In some implementations, processor 510 may be configured to perform a cell reselection procedure and reselect to the target cell after the target cell is determined in the first inter-frequency redistribution procedure.

Alternatively or additionally, in some implementations, when processor 510 receives the paging message with the system information modification and the redistribution indication, processor 510 may be configured to start a timer T360 with the timer value received from SIB3 and performs a first inter-frequency redistribution procedure according to the first set of SIB parameters. In the first inter-frequency redistribution procedure and before receiving a second set of SIB parameters, processor 510 may be configured to determine a first target cell according to the first set of SIB parameters. Specifically, processor 510 may be configured to determine weightings of the neighbor cells based on the redistribution factors of the neighbor cells (e.g., redistributionFactorCell) received from SIB5 and determines weightings of the serving cells based on the redistribution factor of serving cell (e.g., redistributionServingFactor) received from SIB3. Processor 510 may be further configured to determine the first target cell based on the weightings. For example, processor 510 may be configured to determine a cell with the highest weighting as the first target cell where the priority of the first target cell may be lower than the priority of the serving cell. After a modification period, processor 510 may be configured to receive, via communication unit 530, a second set of SIB parameters. After receiving the second set of SIB parameters, processor 510 may be further configured to perform the first inter-frequency redistribution procedure according to the newly received second set of SIB parameters and keep running the timer T360 until T360 is expired. Processor 510 may be configured not to stop or restart the timer T360 when receiving the second set of SIB parameters. In the first inter-frequency redistribution procedure and after receiving the second set of SIB parameters, processor 510 may be configured to determine a second target cell according to the second set of SIB parameters. Specifically, processor 510 may be configured to determine weightings of the neighbor cells based on the redistribution factors of the neighbor cells (e.g., redistributionFactorCell) received from SIB5 and determines weightings of the serving cells based on the redistribution factor of serving cell (e.g., redistributionServingFactor) received from SIB3. Processor 510 may be further configured to determine the second target cell based on the weightings. For example, processor 510 may be configured to determine a cell with the highest weighting as the second target cell where the priority of the second target cell may be lower than the priority of the serving cell. In some implementations, the redistribution factors of the neighbor cells in the second set of SIB parameters may be different from the redistribution factors of the neighbor cells in the first set of SIB parameters. Therefore the second target cell may be different from the first target cell.

In some implementations, processor 510 may be configured to perform a cell reselection procedure after determining a target cell. For example, processor 510 may be configured to measure channel quality or signal strength of a target cell. If a cell reselection criterion is satisfied (e.g., channel quality or signal strength of the target cell is greater than a threshold value), processor 510 may be configured to determine to reselect to the target cell. If a cell reselection criterion is not satisfied (e.g., channel quality or signal strength of the target cell is less than a threshold value), processor 510 may be configured to determine to stay on a current cell. Accordingly, in the first inter-frequency redistribution procedure and before receiving the second set of SIB parameters, processor 510 may be configured to perform a cell reselection procedure and reselect to the first target cell after the first target cell is determined. In the first inter-frequency redistribution procedure and after receiving the second set of SIB parameters, processor 510 may be configured to perform a cell reselection procedure and reselect to the second target cell after the second target cell is determined.

When T360 is expired, processor 510 is configured to terminate the first inter-frequency redistribution procedure. In some implementations, a flag in a SIB (e.g., redistrOnPagingOnly) is used to indicate that the inter-frequency redistribution procedure should be performed in a one-shot mode or in a continuous mode. If the flag (e.g., redistrOnPagingOnly) is present in SIB3, the inter-frequency redistribution procedure is initiated as the one-shot mode. This means that the inter-frequency redistribution procedure should be performed only once. When T360 is expired, processor 510 should be configured to stop performing the inter-frequency redistribution procedure. Contrary, if the flag (e.g., redistrOnPagingOnly) is not present in SIB3, the inter-frequency redistribution procedure is initiated as the continuous mode. This means that the inter-frequency redistribution procedure should be performed continuously. When T360 is expired, processor 510 should be configured to restart the timer T360 and perform a next inter-frequency redistribution procedure.

### Illustrative Processes

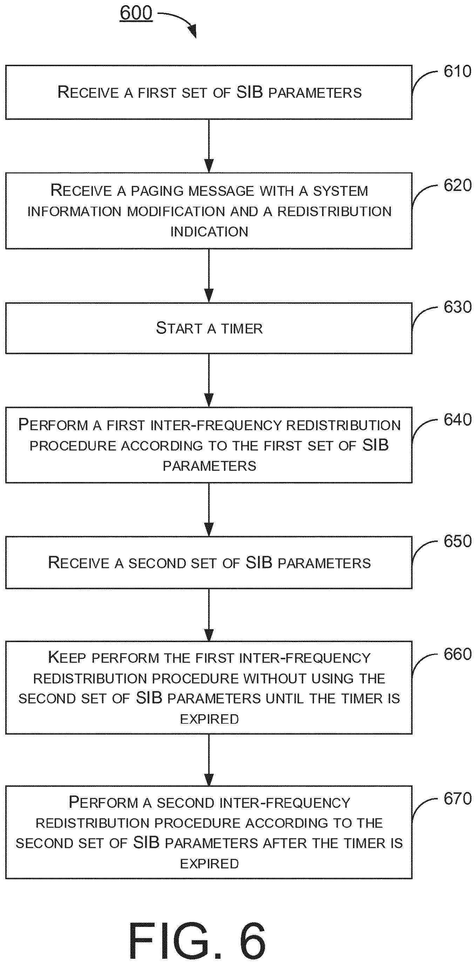

FIG. 6 illustrates an example process 600 in accordance with an implementation of the present disclosure. Process 600 may be an example implementation of scenario 200, whether partially or completely, with respect to paging context handling and inter-frequency redistribution procedure in accordance with the present disclosure. Process 600 may represent an aspect of implementation of features of apparatus 500. Process 600 may include one or more operations, actions, or functions as illustrated by one or more of blocks 610, 620, 630, 640, 650, 660 and 670. Although illustrated as discrete blocks, various blocks of process 600 may be divided into additional blocks, combined into fewer blocks, or eliminated, depending on the desired implementation. Moreover, the blocks of process 600 may executed in the order shown in FIG. 6 or, alternatively, in a different order. Process 600 may be implemented by apparatus 500 or any suitable UE or machine type devices. Solely for illustrative purposes and without limitation, process 600 is described below in the context of apparatus 500. Process 600 may begin at block 610.

At 610, process 600 may involve apparatus 500 receiving a first set of SIB parameters. The first set of SIB parameters is received from a serving cell which apparatus 500 camps on. The first set of SIB parameters include, for example without limitation, a modification period received from SIB2, a timer value T360, a redistribution factor of serving cell (e.g., redistributionServingFactor) and a priority of serving cell received from SIB3, and redistribution factors of neighbor cells (e.g., redistributionFactorCell) and priorities of neighbor cells received from SIB5. In general but without limitation, the timer value T360 is greater than the modification period. The Process 600 may proceed from 610 to 620.

At 620, process 600 may involve apparatus 500 receiving a paging message with a system information modification and a redistribution indication. According to 3GPP specifications, the system information modification is used to inform apparatus 500 that the system information is going to be changed and new system information will be transmitted after a modification period. In other words, the system information will be maintained the same within a modification period. If EUTRAN changes the system information, new system information will be transmitted at the boundary between current modification period and next modification period. The redistribution indication is used to inform apparatus 500 to perform an E-UTRAN inter-frequency redistribution procedure. The Process 600 may proceed from 620 to 630.

At 630, process 600 may involve apparatus 500 starting a timer. The timer value is received from SIB3. The Process 600 may proceed from 630 to 640.

At 640, process 600 may involve apparatus 500 performing a first inter-frequency redistribution procedure according to the first set of SIB parameters. In the first inter-frequency redistribution procedure, apparatus 500 may determine a first target cell according to the first set of SIB parameters. The Process 600 may proceed from 640 to 650.

At 650, process 600 may involve apparatus 500 receiving a second set of SIB parameters. The second set of SIB parameters is received after a modification period from receiving the paging message. The Process 600 may proceed from 650 to 660.

At 660, process 600 may involve apparatus 500 keeping performing the first inter-frequency redistribution procedure according to the first set of SIB parameters without using the newly received second set of SIB parameters until the timer is expired. The Process 600 may proceed from 660 to 670.

At 670, process 600 may involve apparatus 500 performing a second inter-frequency redistribution procedure according to the second set of SIB parameters after the timer is expired. In the second inter-frequency redistribution procedure, apparatus 500 may determine a second target cell according to the second set of SIB parameters.

In some implementations, apparatus 500 may perform a cell reselection procedure after determining a target cell. For example, apparatus 500 may be configured to measure channel quality or signal strength of a target cell. If a cell reselection criterion is satisfied (e.g., channel quality or signal strength of the target cell is greater than a threshold value), apparatus 500 may determine to reselect to the target cell. If a cell reselection criterion is not satisfied (e.g., channel quality or signal strength of the target cell is less than a threshold value), apparatus 500 may determine to stay on a current cell. Accordingly, in the first inter-frequency redistribution procedure, apparatus 500 may perform a cell reselection procedure and reselect to the first target cell after the first target cell is determined. In the second inter-frequency redistribution procedure, apparatus 500 may perform a cell reselection procedure and reselect to the second target cell after the second target cell is determined

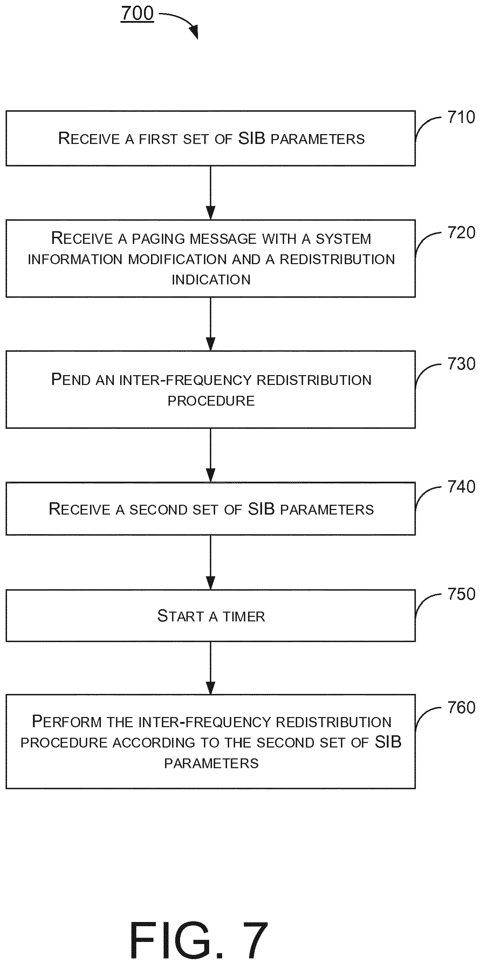

FIG. 7 illustrates an example process 700 in accordance with an implementation of the present disclosure. Process 700 may be an example implementation of scenario 300, whether partially or completely, with respect to paging context handling and inter-frequency redistribution procedure in accordance with the present disclosure. Process 700 may represent an aspect of implementation of features of apparatus 500. Process 700 may include one or more operations, actions, or functions as illustrated by one or more of blocks 710, 720, 730, 740, 750 and 760. Although illustrated as discrete blocks, various blocks of process 700 may be divided into additional blocks, combined into fewer blocks, or eliminated, depending on the desired implementation. Moreover, the blocks of process 700 may executed in the order shown in FIG. 7 or, alternatively, in a different order. Process 700 may be implemented by apparatus 500 or any suitable UE or machine type devices. Solely for illustrative purposes and without limitation, process 700 is described below in the context of apparatus 500. Process 700 may begin at block 710.

At 710, process 700 may involve apparatus 500 receiving a first set of SIB parameters. The first set of SIB parameters is received from a serving cell which apparatus 500 camps on. The first set of SIB parameters include, for example without limitation, a modification period received from SIB2, a timer value T360, a redistribution factor of serving cell (e.g., redistributionServingFactor) and a priority of serving cell received from SIB3, and redistribution factors of neighbor cells (e.g., redistributionFactorCell) and priorities of neighbor cells received from SIB5. In general but without limitation, the timer value T360 is greater than the modification period. The Process 700 may proceed from 710 to 720.

At 720, process 700 may involve apparatus 500 receiving a paging message with a system information modification and a redistribution indication. According to 3GPP specifications, the system information modification is used to inform apparatus 500 that the system information is going to be changed and new system information will be transmitted after a modification period. In other words, the system information will be maintained the same within a modification period. If EUTRAN changes the system information, new system information will be transmitted at the boundary between current modification period and next modification period. The redistribution indication is used to inform apparatus 500 to perform an E-UTRAN inter-frequency redistribution procedure. The Process 700 may proceed from 720 to 730.

At 730, process 700 may involve apparatus 500 suspending an inter-frequency redistribution procedure. Apparatus 500 does not perform the inter-frequency redistribution procedure when receiving the paging message. The Process 700 may proceed from 730 to 740.

At 740, process 700 may involve apparatus 500 receiving a second set of SIB parameters. The second set of SIB parameters is received after a modification period from receiving the paging message. The Process 700 may proceed from 740 to 750.

At 750, process 700 may involve apparatus 500 starting a timer. The timer value is received from SIB3. The Process 700 may proceed from 750 to 760.

At 760, process 700 may involve apparatus 500 performing the inter-frequency redistribution procedure according to the second set of SIB parameters. In the inter-frequency redistribution procedure, apparatus 500 may determine a target cell according to the second set of SIB parameters.

In some implementations, apparatus 500 may perform a cell reselection procedure after determining a target cell. For example, apparatus 500 may be configured to measure channel quality or signal strength of a target cell. If a cell reselection criterion is satisfied (e.g., channel quality or signal strength of the target cell is greater than a threshold value), apparatus 500 may determine to reselect to the target cell. If a cell reselection criterion is not satisfied (e.g., channel quality or signal strength of the target cell is less than a threshold value), apparatus 500 may determine to stay on a current cell. Accordingly, in the inter-frequency redistribution procedure, apparatus 500 may perform a cell reselection procedure and reselect to the target cell after the target cell is determined.

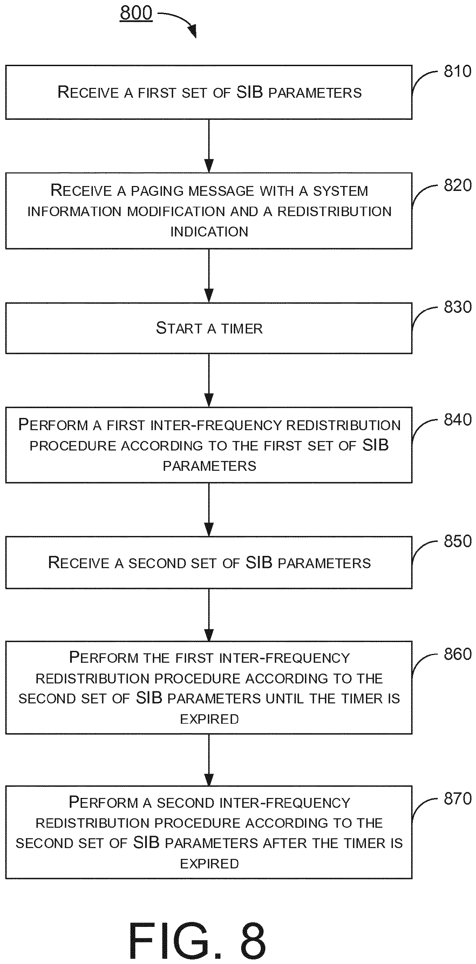

FIG. 8 illustrates an example process 800 in accordance with an implementation of the present disclosure. Process 800 may be an example implementation of scenario 400, whether partially or completely, with respect to paging context handling and inter-frequency redistribution procedure in accordance with the present disclosure. Process 800 may represent an aspect of implementation of features of apparatus 500. Process 800 may include one or more operations, actions, or functions as illustrated by one or more of blocks 810, 820, 830, 840, 850, 860 and 870. Although illustrated as discrete blocks, various blocks of process 800 may be divided into additional blocks, combined into fewer blocks, or eliminated, depending on the desired implementation. Moreover, the blocks of process 800 may executed in the order shown in FIG. 8 or, alternatively, in a different order. Process 800 may be implemented by apparatus 500 or any suitable UE or machine type devices. Solely for illustrative purposes and without limitation, process 800 is described below in the context of apparatus 500. Process 800 may begin at block 810.

At 810, process 800 may involve apparatus 500 receiving a first set of SIB parameters. The first set of SIB parameters is received from a serving cell which apparatus 500 camps on. The first set of SIB parameters include, for example without limitation, a modification period received from SIB2, a timer value T360, a redistribution factor of serving cell (e.g., redistributionServingFactor) and a priority of serving cell received from SIB3, and redistribution factors of neighbor cells (e.g., redistributionFactorCell) and priorities of neighbor cells received from SIB5. In general but without limitation, the timer value T360 is greater than the modification period. The Process 800 may proceed from 810 to 820.

At 820, process 800 may involve apparatus 500 receiving a paging message with a system information modification and a redistribution indication. According to 3GPP specifications, the system information modification is used to inform apparatus 500 that the system information is going to be changed and new system information will be transmitted after a modification period. In other words, the system information will be maintained the same within a modification period. If EUTRAN changes the system information, new system information will be transmitted at the boundary between current modification period and next modification period. The redistribution indication is used to inform apparatus 500 to perform an E-UTRAN inter-frequency redistribution procedure. The Process 800 may proceed from 820 to 830.

At 830, process 800 may involve apparatus 500 starting a timer. The timer value is received from SIB3. The Process 800 may proceed from 830 to 840.

At 840, process 800 may involve apparatus 500 performing a first inter-frequency redistribution procedure according to the first set of SIB parameters. In the first inter-frequency redistribution procedure, apparatus 500 may determine a first target cell according to the first set of SIB parameters. The Process 800 may proceed from 840 to 850.

At 850, process 800 may involve apparatus 500 receiving a second set of SIB parameters. The second set of SIB parameters is received after a modification period from receiving the paging message. The Process 800 may proceed from 850 to 860.

At 860, process 800 may involve apparatus 500 performing the first inter-frequency redistribution procedure according to the second set of SIB parameters until the timer is expired. In the first inter-frequency redistribution procedure and after receiving the second set of SIB parameters, apparatus 500 may determine a second target cell according to the second set of SIB parameters. When the timer is expired, apparatus 500 may terminate the first inter-frequency redistribution procedure.

In some implementations, a flag in a SIB (e.g., redistrOnPagingOnly) is used to indicate that the inter-frequency redistribution procedure should be performed in a one-shot mode or in a continuous mode. If the flag (e.g., redistrOnPagingOnly) is present in SIB3, the inter-frequency redistribution procedure is initiated as the one-shot mode. This means that the inter-frequency redistribution procedure should be performed only once. When the timer is expired, apparatus 500 should stop performing the inter-frequency redistribution procedure. Contrary, if the flag (e.g., redistrOnPagingOnly) is not present in SIB3, the inter-frequency redistribution procedure is initiated as the continuous mode. This means that the inter-frequency redistribution procedure should be performed continuously. When the timer is expired, apparatus 500 should restart the timer and perform a next inter-frequency redistribution procedure. As showed in Fig. 8, process 800 may proceed from 860 to 870.

At 870, process 800 may involve apparatus 500 performing a second inter-frequency redistribution procedure according to the second set of SIB parameters after the timer is expired.

In some implementations, apparatus 500 may perform a cell reselection procedure after determining a target cell. For example, apparatus 500 may be configured to measure channel quality or signal strength of a target cell. If a cell reselection criterion is satisfied (e.g., channel quality or signal strength of the target cell is greater than a threshold value), apparatus 500 may determine to reselect to the target cell. If a cell reselection criterion is not satisfied (e.g., channel quality or signal strength of the target cell is less than a threshold value), apparatus 500 may determine to stay on a current cell. Accordingly, in the first inter-frequency redistribution procedure and before receiving the second set of SIB parameters, apparatus 500 may perform a cell reselection procedure and reselect to the first target cell after the first target cell is determined. In the second inter-frequency redistribution procedure and after receiving the second set of SIB parameters, apparatus 500 may perform a cell reselection procedure and reselect to the second target cell after the second target cell is determined.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., " a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., " a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope and spirit of the present disclosure. Accordingly, the various implementations disclosed herein are not intended to be limiting, with the true scope and spirit being indicated by the following claims.

## Claims

1. A method, comprising:
receiving, by a processor of an apparatus, a paging message with a system information modification and a redistribution indication;
starting, by the processor of the apparatus, a timer; and
performing, by the processor of the apparatus, a first inter-frequency redistribution procedure according to a first set of system information block (SIB) parameters.

2. The method of claim 1, further comprising:
reselecting, by the processor of the apparatus, to a first target cell according to the first set of SIB parameters in the first inter-frequency redistribution procedure.

3. The method of claim 1 or 2, further comprising:
receiving, by the processor of the apparatus, a second set of SIB parameters before the timer is expired;
performing, by the processor of the apparatus, the first inter-frequency redistribution procedure according to the second set of SIB parameters after receiving the second set of SIB parameters.

4. The method of claim 3, further comprising:
reselecting, by the processor of the apparatus, to a second target cell according to the second set of SIB parameters in the first inter-frequency redistribution procedure.

5. The method of claim 3 or 4, wherein the second set of SIB parameters is received after a modification period from receiving the paging message.

6. The method of any of claims 3 to 5, wherein the processor of the apparatus performs the first inter-frequency redistribution procedure according to the second set of SIB parameters until the timer is expired.

7. The method of any of claims 3 to 6, further comprising:
performing, by the processor of the apparatus, a second inter-frequency redistribution procedure according to the second set of SIB parameters after the timer is expired.

8. The method of any of the preceding claims, wherein the first set of SIB parameters is received before performing the inter-frequency redistribution procedure.

9. The method of any of the preceding claims, further comprising:
receiving, by the processor of the apparatus, a second set of SIB parameters before the timer is expired;
performing, by the processor of the apparatus, the first inter-frequency redistribution procedure without using the second set of SIB parameters until the timer is expired.

10. A method, comprising:
receiving, by a processor of an apparatus, a paging message with a system information modification and a redistribution indication; and
suspending, by the processor of the apparatus, an inter-frequency redistribution procedure;
receiving, by the processor of the apparatus, a new set of SIB parameters; and
performing, by the processor of the apparatus, the inter-frequency redistribution procedure according to the new set of SIB parameters after receiving the new set of SIB parameters.

11. The method of claim 10, wherein the new set of SIB parameters is received after a modification period from receiving the paging message.

12. The method of claim 10 or 11, further comprising:
reselecting, by the processor of the apparatus, to a target cell in the inter-frequency redistribution procedure.

13. The method of claim 10, wherein the processor of the apparatus does not reselect to a target cell when receiving the paging message.

14. The method of any of claims 10 to 13, further comprising:
starting, by the processor of the apparatus, a timer after receiving the new set of SIB parameters.

15. The method of any of claims 10 to 14, wherein the processor of the apparatus performs the inter-frequency redistribution procedure according to the new set of SIB parameters until the timer is expired.
